# FASCICULE DE BREVET EUROPEEN

(11) **EP 3 975 364 B1**
(45) Date de publication et mention de la délivrance du brevet: **16.04.2025**
(21) Numéro de dépôt: 21199885.1
(22) Date de dépôt: 29.09.2021
(51) Int. Cl.: H02J 1/06, H02J 1/10, H02J 7/00, H02J 13/00

(54) **DISPOSITIF DE GESTION D'ALIMENTATION EN ÉNERGIE, SYSTÈME, PROCÉDÉ ET PROGRAMME D'ORDINATEUR ASSOCIÉS**
VORRICHTUNG ZUR STEUERUNG DER ENERGIEZUFÜHRUNG, ENTSPRECHENDES SYSTEM, VERFAHREN UND COMPUTERPROGRAMM
DEVICE FOR MANAGING POWER SUPPLY, ASSOCIATED SYSTEM, METHOD AND COMPUTER PROGRAM

(30) Priorité: 29.09.2020 FR 2009875
(43) Date de publication de la demande: 30.03.2022
(73) Titulaire: THALES, 92400 Courbevoie (FR)
(72) Inventeur: MONTEZIN, Arnaud, 19311 Brive la Gaillarde Cedex (FR); RAYNAL, Olivier, 19311 Brive la Gaillarde Cedex (FR); MIQUEL, Stéphane, 92622 Gennevilliers Cedex (FR); OUADAH, Méziane, 92622 Gennevilliers Cedex (FR)
(74) Mandataire: Lavoix

(56) Documents cités:
- EP-A1- 3 121 926
- US-A- 5 914 585
- US-A1- 2014 365 792
- US-A1- 2017 163 051
- US-A1- 2017 338 525

## Description

La présente invention concerne un dispositif de gestion d'alimentation en énergie embarqué dans chaque équipement portable et/ou batterie portable appartenant à une pluralité d'équipement(s) portable(s) et/ou de batterie(s) portable(s) distinct(s) d'un système portable de gestion d'alimentation en énergie, tel que défini dans la revendication 1.

La présente invention concerne également un système associé de gestion d'alimentation en énergie de ladite pluralité d'équipement(s) portable(s) et/ou de batterie(s) portable(s) distinct(s), tel que défini dans la revendication 7.

La présente invention concerne également un procédé de gestion d'alimentation en énergie dudit système de gestion d'alimentation en énergie comprenant ladite pluralité d'équipement(s) et/ou de batterie(s) distinct(s), tel que défini dans la revendication 8.

L'invention concerne également un programme d'ordinateur comportant des instructions logicielles qui lorsqu'elles sont exécutées par un ordinateur, mettent en œuvre le procédé précité de gestion d'alimentation en énergie d'un système de gestion d'alimentation en énergie comprenant une pluralité d'équipement(s) et/ou de batterie(s) distinct(s), tel que défini dans la revendication 9.

La présente invention concerne de manière générale la distribution et la gestion de l'énergie d'une pluralité d'équipement(s) portable(s) et/ou de batterie(s) portable(s) distinct(s) notamment utilisés par des utilisateurs mobiles à pied et/ou à bord de véhicules, tels que des équipes militaires sur des zones tactiques.

Le plus souvent une telle pluralité d'équipement(s) portable(s) et/ou de batterie(s) portable(s) distinct(s) présente des systèmes d'alimentation hétérogènes d'un équipement et/ou d'une batterie à l'autre de ladite pluralité d'équipement(s) portable(s) et/ou de batterie(s) portable(s) distinct(s). Un exemple est le document US 5 914 585.

Par ailleurs, de tels systèmes d'alimentation hétérogènes correspondent le plus souvent à des systèmes propriétaires organisés par exemple selon :
- une architecture centralisée faisant par exemple intervenir un boitier d'interconnexion central correspondant à un système propriétaire, ou
- une architecture individualisée impliquant notamment une tension et un courant de charge/décharge propre à chaque batterie/équipement et un chargeur avec des interfaces mécaniques et électriques spécifique à chaque batterie/équipement, ou encore
- une architecture mixte correspondant à une combinaison des architectures précédentes avec à la fois un élément d'interconnexion central et un chargeur avec des interfaces mécaniques et électriques spécifique à chaque batterie/équipement.

De telles solutions le plus souvent propriétaires ne permettent pas actuellement un branchement parallèle des équipement(s) portable(s) et/ou des batterie(s) portable(s) distinct(s) de la pluralité pour notamment additionner leur puissance instantanée disponible, ou encore d'utiliser la batterie d'un équipement comme source d'énergie disponible d'un autre équipement plus vital mais déchargé.

Le but de l'invention est alors de proposer un dispositif et un procédé associé qui permettent d'optimiser et de mutualiser les ressources en énergie disponibles au sein de la pluralité d'équipement(s) portable(s) et/ou de batterie(s) portable(s) distinct(s), tout en évitant l'utilisation d'une architecture centralisée ou encore d'un système propriétaire.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une vue schématique d'un exemple de système portable de gestion d'alimentation en énergie ;
- les figures 2 à 4 sont respectivement trois illustrations schématiques de trois modes de fonctionnement « intelligents » distincts d'une batterie indépendante ou intégrée au sein d'un équipement portable ;
- la figure 5 illustre schématiquement différents scénarios d'utilisation du système portable de gestion d'alimentation en énergie ;
- les figures 6 et 7 illustrent différents scénarios de communication au sein du système portable de gestion d'alimentation en énergie de la figure 1.

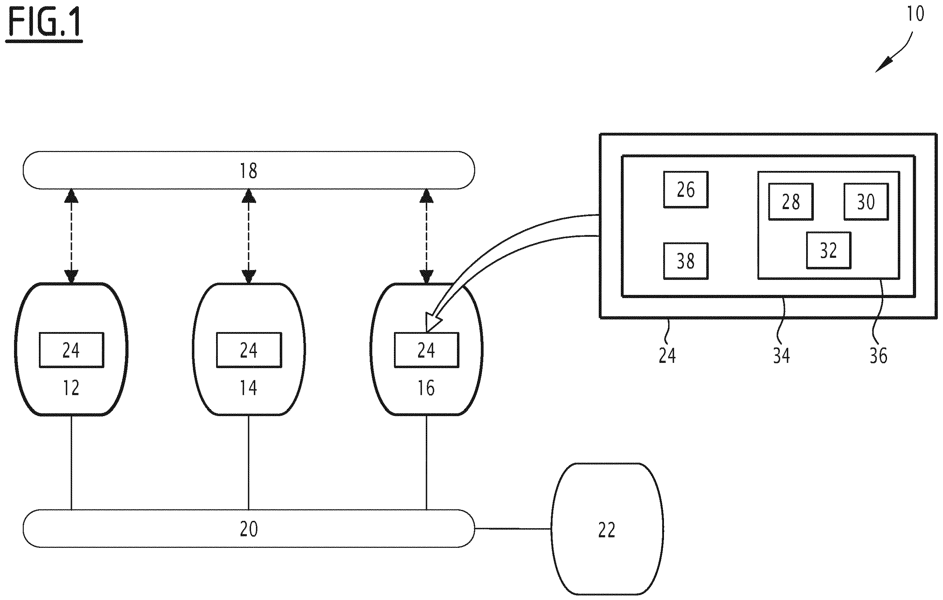

Sur l'exemple de la figure 1, un système 10 de gestion d'alimentation en énergie d'une pluralité d'équipement(s) portable(s) et/ou de batterie(s) portable(s) distinct(s) est représenté.

Plus précisément, le système 10 comprend ladite pluralité d'équipement(s) portable(s) et/ou de batterie(s) portable(s) distinct(s), par exemple composée, telle que représentée sur la figure 1, de trois éléments 12, 14, 16, correspondant par exemple, à une batterie indépendante 12, à un équipement portable 14 comprenant une batterie au sein de son boîtier tel qu'une radio logicielle haut-débit, et à un équipement portable dépourvu de batterie 16 contrairement à l'équipement portable 14, tel qu'un casque audio ou encore un visiocasque.

Le système 10 de gestion d'alimentation en énergie comprend en outre un hub 18 de communication de données connectable simultanément à chaque équipement portable et/ou batterie portable 12, 14, 16 de ladite pluralité formant un réseau de communication.

Par hub, on entend un appareil, par exemple sous la forme d'un cordon ceinturable autour de la taille de l'utilisateur de la pluralité d'équipement(s) portable(s) et/ou de batterie(s) portable(s) distinct(s), connectable, par exemple au moyen d'une pluralité de ports USB, à chaque équipement portable et/ou batterie de la pluralité en réseau et permettant de concentrer leurs données de communication respectives pour les transmettre sur un unique canal de communication.

Le système 10 de gestion d'alimentation en énergie comprend également un bus 20 d'alimentation et de partage d'énergie également connectable simultanément en parallèle à chaque équipement portable et/ou batterie portable 12, 14, 16 de ladite pluralité formant un réseau d'alimentation en énergie de la pluralité d'équipement(s) portable(s) et/ou de batterie(s) portable(s) distinct(s).

Selon une première variante non représentée, le hub 18 de communication de données et/ou le bus 20 d'alimentation et de partage d'énergie est/sont propre(s) à être centralisé(s) dans un même boîtier externe non représenté distinct de, et connectable à, chaque équipement portable et/ou batterie portable 12, 14, 16. Dans ce cas, un tel boîtier de centralisation externe comprend par exemple autant de liaisons partant du hub 18 de communication de données et/ou du bus 20 d'alimentation et de partage d'énergie, qu'il n'y a d'équipement(s) portable(s) ou de batterie(s) portable(s) dans ladite pluralité d'équipement(s) portable(s) et/ou de batterie(s) portable(s) distinct(s) du système 10 portable de gestion d'alimentation en énergie.

Selon une deuxième variante non représentée, le hub 18 de communication de données et/ou le bus 20 d'alimentation et de partage d'énergie est/sont propre(s) à être centralisé(s) dans un équipement portable ou une batterie portable de la pluralité d'équipement(s) portable(s) et/ou de batterie(s) portable(s) distinct(s) 12, 14, 16 du système 10 portable de gestion d'alimentation en énergie. Dans le cas où le hub 18 de communication de données et le bus 20 d'alimentation et de partage d'énergie sont à la fois centralisés dans un même équipement portable ou une même batterie portable du système 10 portable de gestion d'alimentation en énergie, le hub 18 de communication de données et le bus 20 d'alimentation et de partage d'énergie sont connectables simultanément à chaque autre équipement et/ou batterie du système 10 portable de gestion d'alimentation en énergie via un toron propre à contenir une liaison de communication des signaux associées au hub 18 de communication et également à contenir les fils d'alimentation du bus 20 d'alimentation et de partage d'énergie.

Selon une troisième variante non représentée, le hub 18 de communication de données et/ou le bus 20 d'alimentation et de partage d'énergie est/sont propre(s) à être intégré(s) dans chaque équipement et/ou batterie du système 10 portable de gestion d'alimentation en énergie. Dans le cas où le hub 18 de communication de données et le bus 20 d'alimentation et de partage d'énergie sont à la fois intégrés dans chaque équipement et/ou batterie du système 10 portable de gestion d'alimentation en énergie, le hub 18 de communication de données et le bus 20 d'alimentation et de partage d'énergie sont connectables simultanément d'un(e) équipement et/ou batterie du système 10 portable de gestion d'alimentation en énergie à un(e) autre, via un toron propre à contenir une liaison de communication des signaux associées au hub 18 de communication et également à contenir les fils d'alimentation du bus 20 d'alimentation et de partage d'énergie. Autrement dit, les équipement(s) et/ou batterie(s) du système 10 sont chaînés les uns aux autres via un tel toron, contenant une liaison de communication des signaux associées au hub 18 de communication et également à contenir les fils d'alimentation du bus 20 d'alimentation et de partage d'énergie, toron étant disposé entre chaque équipement et/ou batterie du système 10.

Toute autre combinaison des trois variantes précitées est également envisageable, par exemple une variante dans laquelle le hub 18 de communication est centralisé au sein d'un boîtier externe non représenté distinct de, et connectable à, chaque équipement portable et/ou batterie portable 12, 14, 16, tandis que le bus 20 d'alimentation et de partage d'énergie est lui centralisé au sein d'un équipement portable ou une batterie portable de la pluralité d'équipement(s) portable(s) et/ou de batterie(s) portable(s) distinct(s) 12, 14, 16 du système 10 portable de gestion d'alimentation en énergie.

Selon l'exemple de la figure 1, le système 10 de gestion d'alimentation en énergie comprend par ailleurs une source d'énergie 22 connectable optionnellement au réseau d'alimentation précité au moyen d'une liaison filaire complétée optionnellement d'une liaison sans fil connectée au bus 20 d'alimentation et de partage d'énergie, la liaison présentant un atout complémentaire ergonomique par rapport à l'usage d'un connecteur.

En particulier, le bus 20 d'alimentation et de partage d'énergie est connectable sur un réseau véhicule propre à jouer le rôle de source d'énergie 22, ou encore est connectable à une de source de tension 22 (i.e. d'énergie) sans fil portative par exemple par couplage inductif, ou encore est connectable à la sortie régulée d'une source d'énergie portative tel qu'un panneau solaire, une pile à combustible, la sortie d'une alimentation d'ordinateur portable, etc.

Selon un cas particulier non représenté, lorsque la tension de bus 20 d'alimentation et de partage d'énergie est propre à être comprise entre 5 et 20 volts, le bus 20 d'alimentation et de partage d'énergie et le hub 18 de communication de données sont connectables, au travers d'un câble USB non représenté, à une source d'énergie 22 conforme à la norme USB PD (de l'anglais USB Power Delivery) et comprenant une interface de dialogue.

Selon la présente invention, chaque équipement et/ou batterie de ladite pluralité comprend un dispositif 24 de gestion d'alimentation en énergie. Selon l'invention, le dispositif 24 de gestion d'alimentation en énergie d'un premier équipement portable et/ou d'une première batterie portable de ladite pluralité est configuré pour participer à la gestion d'énergie au sein dudit réseau d'alimentation, en communiquant, via le hub de communication, avec au moins un autre dispositif 24 identique de gestion d'alimentation en énergie embarqué dans un autre équipement portable et/ou une autre batterie portable de ladite pluralité.

Autrement dit, l'équipement portable 14 comprenant une batterie au sein de son boîtier tel qu'une radio logicielle haut-débit, la batterie indépendante 12, et l'équipement portable dépourvu de batterie 16 embarquent chacun un dispositif 24 de gestion d'alimentation en énergie. Pourvu(s) d'un tel dispositif 24 de gestion d'alimentation en énergie, on parle alors d'équipement portable ou de batterie intelligente, le dispositif 24 de gestion d'alimentation en énergie de l'équipement portable 14 comprenant une batterie étant notamment configuré pour participer à la gestion d'énergie au sein dudit réseau d'alimentation, en communiquant, via le hub de communication 18, avec le dispositif 24 de gestion d'alimentation en énergie de la batterie indépendante 12 et avec le dispositif 24 de gestion d'alimentation en énergie de l'équipement portable dépourvu de batterie 16.

Chaque dispositif 24 de gestion d'alimentation en énergie comprend notamment un module d'émission-réception 26, tel qu'un port physique d'entrée/sortie ou encore une antenne, configuré pour transmettre/recevoir, via le hub de communication 18 des données à destination/ en provenance, respectivement, d'un autre dispositif 24 de gestion d'alimentation en énergie.

En particulier, chaque dispositif 24 de gestion d'alimentation en énergie est configuré pour jouer un rôle de maître ou d'esclave au sein d'un ensemble de dispositifs 24 de gestion d'alimentation en énergie associés chacun respectivement à un équipement portable 14, 16 et/ou batterie portable 12 de ladite pluralité.

Par exemple, selon l'exemple de la figure 1, le dispositif 24 de gestion d'alimentation en énergie de l'équipement portable 14 comprenant une batterie joue le rôle de maître tandis que le dispositif 24 de gestion d'alimentation en énergie de la batterie indépendante 12 et le dispositif 24 de gestion d'alimentation en énergie de l'équipement portable dépourvu de batterie 16 jouent tous deux le rôle d'esclave.

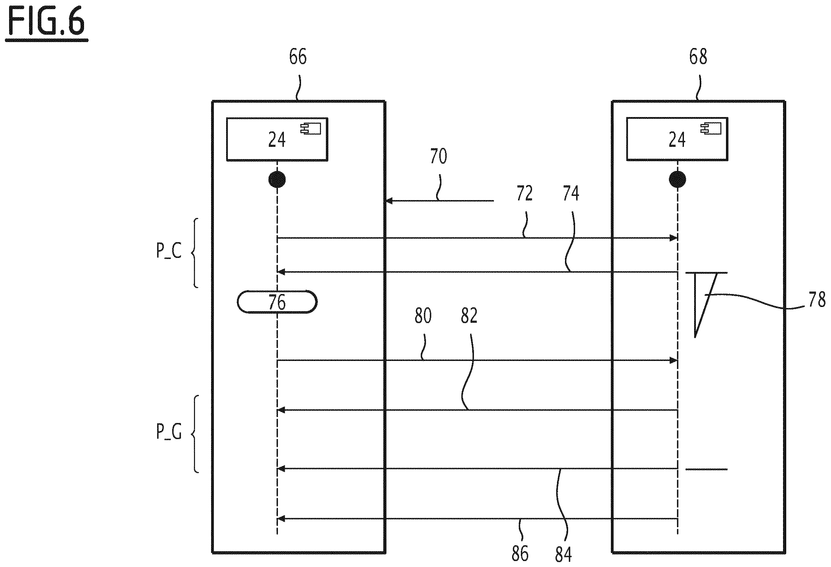

Plus précisément, comme détaillé par la suite en relation avec la figure 6, le dispositif 24 d'un équipement portable 14, 16 et/ou d'une batterie portable 12 jouant le rôle de maître courant est configuré pour émettre, via le module d'émission-réception 26, au moins une requête et/ou commande générée par un module de gestion de message(s) 28, à destination d'au moins un autre dispositif 24 esclave de gestion d'alimentation en énergie, tandis que le dispositif 24 d'un équipement portable 14, 16 et/ou d'une batterie portable 12 jouant le rôle d'esclave est configuré pour répondre, via le module d'émissionréception 26, à une requête émise par un tel dispositif maître 24, courant, de gestion d'alimentation en énergie et/ou pour exécuter une commande émise par un tel dispositif 24 maître, courant, de gestion d'alimentation en énergie.

Chaque dispositif 24 de gestion d'alimentation en énergie comprend un module de gestion de message(s) 28 configuré pour générer des messages propres à être échangés entre les équipement portable 14, 16 et/ou la batterie portable 12 en fonction de son rôle de maître ou d'esclave.

Chaque dispositif 24 de gestion d'alimentation en énergie comprend en outre un module 30 de contrôle/commande, il assure le rôle de chef d'orchestre de la gestion d'alimentation en énergie et d'exécution de commande en fonction du rôle de maître ou d'esclave du dispositif 24 de gestion d'alimentation en énergie considéré. Plus précisément, un tel module 30 de contrôle/commande correspond à un automate propre à interpréter les requêtes/réponses échangées via le hub de communication 18 afin de réaliser la fonction de gestion d'alimentation en énergie et commander en fonction le module de gestion de message(s) 28 afin de générer un ou des message(s) adaptés.

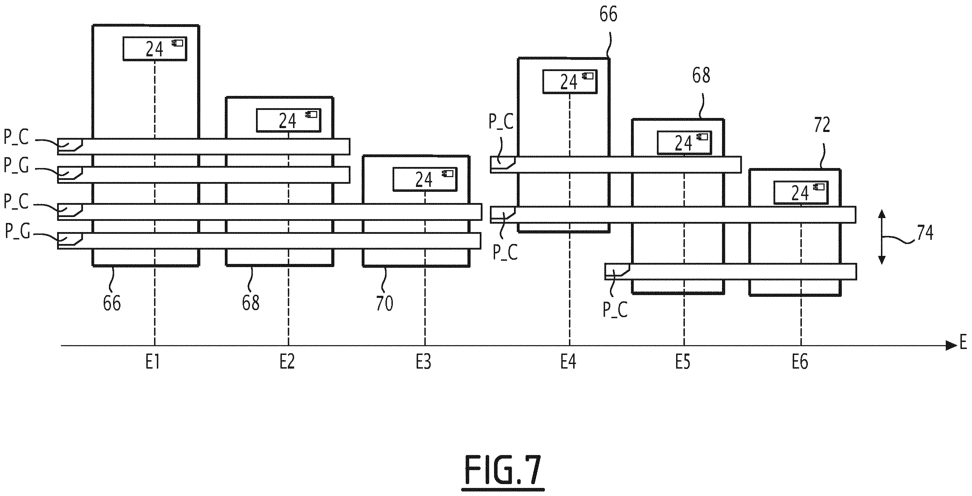

Chaque dispositif 24 de gestion d'alimentation en énergie comprend en outre un module 32 de gestion du rôle de maître ou d'esclave configuré pour relayer le rôle de maître en cas de branchement/débranchement d'un des éléments 12, 14, 16 de la pluralité d'équipement(s) portable(s) et/ou de batterie(s) portable(s) distinct(s) tel que détaillé par la suite en relation avec la figure 7, y compris et *a fortiori* l'élément de la pluralité embarquant le dispositif 24 de gestion d'alimentation en énergie jouant le rôle de maître courant.

Dans l'exemple de la figure 1, le dispositif 24 de gestion d'alimentation en énergie comprend une unité de traitement d'informations 34 formée par exemple d'une mémoire 36 comprenant un espace mémoire dédié de mémoire vive non représenté, et un espace mémoire dédié de mémoire de stockage non représenté, tel que par exemple un espace mémoire FLASH, et formée d'un processeur 38, tel qu'un microprocesseur, ou encore un microcontrôleur associé à la mémoire 36.

Dans l'exemple de la figure 1, le module de gestion de message(s) 28, le module de contrôle/commande 30 et le module de gestion du rôle de maître ou d'esclave 32, sont réalisés chacun sous forme d'un logiciel, ou d'une brique logicielle, exécutables par le processeur 38. La mémoire 36 du dispositif de gestion d'alimentation en énergie 24 est alors apte à stocker un logiciel de gestion de message(s), un logiciel de contrôle/commande et un logiciel de gestion du rôle de maître ou d'esclave configuré pour relayer le rôle de maître en cas de branchement/débranchement d'un des éléments 12, 14, 16 de la pluralité d'équipement(s) portable(s) et/ou de batterie(s) portable(s) distinct(s). Le processeur 38 est alors apte à exécuter chacun des logiciels parmi le logiciel de gestion de message(s), le logiciel de contrôle/commande et le logiciel de gestion du rôle de maître ou d'esclave.

En variante non représentée, le module de gestion de message(s) 28, le module de contrôle/commande 30 et le module de gestion du rôle de maître ou d'esclave 32sont hébergés au sein d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif 24 de gestion d'alimentation en énergie est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles. Par exemple, de tels logiciels sont stockés sous forme d'un binaire en FLASH et exécutés en RAM.

Ainsi, selon le système 10 de gestion d'alimentation en énergie de la présente invention, chaque batterie 12 ou équipement 14, 16 est raccordé à un hub 18 de communication pour permettre le management de l'énergie et à un bus 20 d'alimentation unique pour faire transiter l'énergie. Une telle solution, basée sur l'interconnexion des équipements 14 et 16 et batteries 12 à un seul bus d'alimentation 20 et à un simple hub de communication 18, est alors universelle (i.e. non propriétaire).

Le dispositif de gestion d'alimentation en énergie 24 correspond à un agent intelligent, notamment logiciel, et est localisé dans chaque équipement 14, 16 et/ou batterie indépendante 12. Chaque agent a la capacité maître ou esclave. A un moment donné, un des agents, en tant que maître est l'arbitre des échanges d'énergie et :
- identifie, via le module d'émission-réception 26, le module de gestion de message(s) 28 et via le hub de communication 18, les équipements/batteries simultanément connectés au réseau de communication via le hub 18 et au réseau d'alimentation via le bus 20, et identifie leurs besoins respectifs en énergie ;
- récupère, via le module d'émission-réception 26, le module de gestion de message(s) 28 et via le hub de communication 18, les états de charges des batteries ainsi connectées,
- définit, via le module de contrôle/commande 30 et/ou via le module 32 de gestion, les équipements et batteries prioritaires, notamment par exemple en fonction de la mission de l'utilisateur et/ou d'une information de priorisation saisie via une interface de supervision non représentée, par l'utilisateur,
- alloue les puissances à chaque équipement, notamment via le module de contrôle/commande 30.

De plus, selon la présente invention, chaque équipement portable 14, 16 et/ou batterie portable 12 de ladite pluralité comprend en outre un convertisseur propre à adapter la tension du bus d'alimentation à leur propre tension interne de service. Il s'agit notamment d'un convertisseur DC-DC propre à convertir une tension continue d'une première valeur en une tension continue d'une seconde valeur.

En outre, chaque batterie comprenant en outre un module d'aiguillage de chargement et ou de fourniture d'énergie via le bus d'alimentation.

En d'autres termes, l'architecture du système 10 de gestion d'alimentation en énergie de la présente invention implique également que des fonctions de puissance soient incluses dans chaque équipement 14, 16 ou source d'énergie (i.e. batterie) 12.

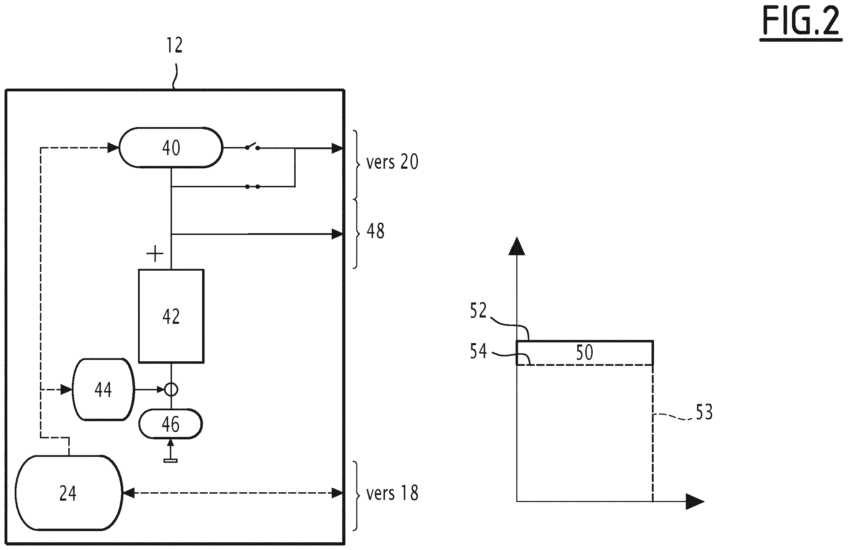

Les figures 2 à 4 sont respectivement trois illustrations schématiques de trois modes de fonctionnement « intelligents » distincts d'une batterie indépendante 12 ou intégrée au sein d'un équipement portable 14.

Sur les figures 2 à 4, chaque batterie intelligente selon la présente invention comprend :
- le dispositif 24 de gestion d'alimentation en énergie,
- un ensemble 40 formé d'un convertisseur, notamment un convertisseur DC-DC, propre à adapter la tension du bus d'alimentation à leur propre tension interne de service, et formé d'un module d'aiguillage bidirectionnel propre à agir sur au moins une paire d'interrupteurs (un interrupteur inférieur et un interrupteur supérieur) en fonction du mode de fonctionnement activé ;
- un batterie d'accumulateurs 42 (de l'anglais *battery pack*) ;
- un jauge de charge 44 ;
- système de protection 46 de la batterie d'accumulateurs 42 ;
- une première entrée/sortie vers le bus d'alimentation 20 ;
- une deuxième entrée/sortie 48 vers un équipement lorsque ladite batterie est embarquée au sein d'un équipement portable 14 ;
- une troisième entrée/sortie vers le hub 18 de communication, par exemple conforme au protocole USB2.0.

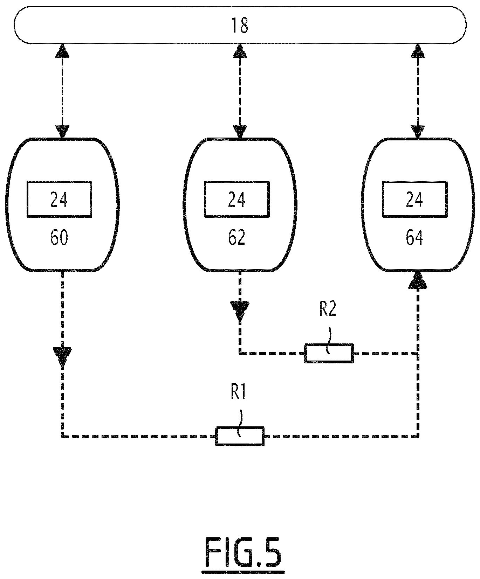

Selon la présente invention, cinq variantes de fonctionnement d'une telle batterie intelligente sont propres à être mis en œuvre, à savoir :
- deux modes de distribution d'énergie, appelés respectivement mode non prioritaire d'une part et mode prioritaire d'autre part, avec en outre une variante particulière détaillée par la suite en relation avec la figure 5 du mode prioritaire associée à la mise en œuvre simultanée du mode de distribution prioritaire par au moins deux batteries portables pour mettre en commun leur énergie (i.e. partager (de l'anglais *sharing*) entre elles l'effort d'alimentation) afin d'alimenter un autre équipement ;
- un mode d'alimentation (i.e. mode chargeur) ;
- un mode protection en cas d'atteinte de la limite de courant ou de température propre à la batterie d'accumulateurs 42.

La figure 2 représente le mode de distribution non prioritaire de la batterie correspondant à un niveau 50 de tension de bus 20 compris entre la tension maximale 52 de la batterie d'accumulateurs 42 et sa tension minimale 54 représenté en ordonnée en fonction du courant maximal 53 de la batterie d'accumulateurs. Selon un tel mode de distribution non prioritaire la batterie portable 12 (ou encore la batterie embarquée au sein de l'équipement portable 14) contribue à l'alimentation d'au moins un autre équipement portable connecté(s) au réseau de communication en fournissant une tension de bus 20 non régulée associée à son propre état de charge.

Un tel mode de distribution non prioritaire permet le branchement d'autant de batterie(s) que souhaitée(s) en parallèle ce qui augmente l'autonomie des équipements 14, 16 du système 10, la possibilité « d'échange à chaud » (i.e. de l'anglais *hot-swap)* de batterie sans interrompre le fonctionnement d'un équipement (i.e. continuité de service) propre à être alimenté successivement ou parallèlement par différentes batteries connectées au bus 20 d'alimentation et se caractérise par une absence de perte au sein du convertisseur de l'ensemble 40, et par une fermeture de l'interrupteur inférieur contre une ouverture de l'interrupteur supérieur par le module d'aiguillage de l'ensemble 40. De plus, un tel mode de distribution non prioritaire ne permet pas la sélection de la batterie qui fournit l'énergie requise par un équipement demandeur connecté au réseau d'alimentation et au réseau de communication respectivement via le hub 18 et le bus 20. En effet, selon ce mode de distribution non prioritaire c'est la batterie qui présente la tension la plus haute qui fournit alors l'énergie demandée.

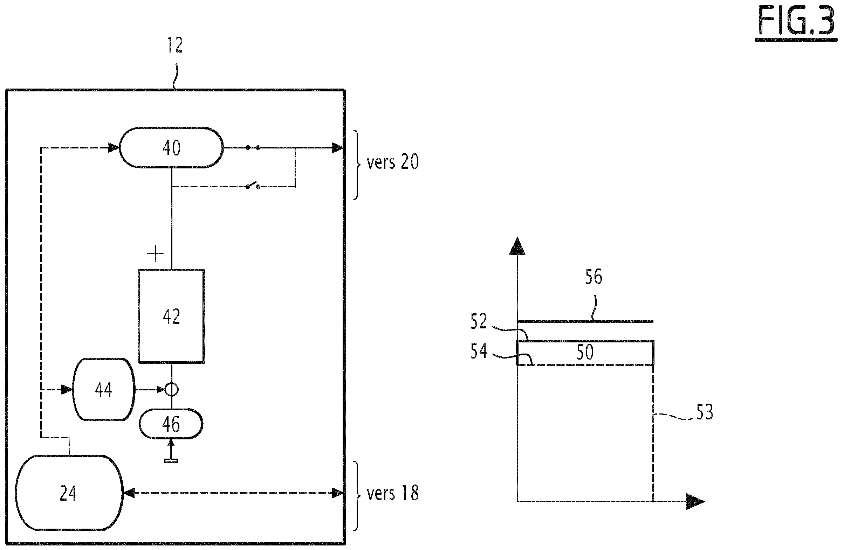

La figure 3 représente le mode de distribution prioritaire d'une batterie indépendante 12 (i.e. non embarquée au sein d'un équipement) correspondant à un niveau de tension 56 supérieur au niveau de tension régulée 50 associé au mode de distribution non prioritaire. Autrement dit, selon un tel mode de distribution prioritaire la batterie portable 12 (ou encore la batterie embarquée au sein de l'équipement portable 14), ladite au moins une batterie portable est utilisée prioritairement pour contribuer à l'alimentation d'au moins un autre équipement portable connecté(s) au réseau de communication en fournissant une tension régulée prédéterminée de valeur supérieure à la tension maximale associée à l'ensemble d'accumulateurs de ladite batterie portable utilisée prioritairement.

De même que le mode non prioritaire, le mode prioritaire permet le branchement d'autant de batterie(s) que souhaitée(s) en parallèle, la possibilité « d'échange à chaud » (i.e. de l'anglais *hot-swap)* de batterie sans interrompre le fonctionnement d'un équipement (i.e. continuité de service) propre à être alimenté successivement ou parallèlement par différentes batteries connectées au bus 20 d'alimentation, et se caractérise en revanche par une perte de l'ordre de 5% au sein du convertisseur de l'ensemble 40, et par une fermeture de l'interrupteur supérieur contre une ouverture de l'interrupteur inférieur par le module d'aiguillage de l'ensemble 40.

Avantageusement, un tel mode prioritaire permet notamment de :
- décharger complètement une batterie avant son changement au lieu d'en décharger plusieurs partiellement simultanément,
- sélectionner, par le dispositif 24 de gestion d'alimentation en énergie jouant le rôle de maître au sein du réseau de communication via le hub 18 et au sein du réseau d'alimentation via le bus 20, une des batteries disponibles pour le rechargement (i.e. disponible pour l'alimentation) dont la puissance est adaptée à l'équipement à alimenter,
- additionner la puissance instantanée de plusieurs batteries en mode prioritaire selon la variante particulière détaillée par la suite en relation avec la figure 5 du mode prioritaire associée à la mise en œuvre simultanée du mode de distribution prioritaire par au moins deux batteries portables pour mettre en commun leur énergie (i.e. partager (de l'anglais *sharing*) entre elles l'effort de rechargement (i.e. l'effort d'alimentation)) afin d'alimenter un autre équipement, ou encore
- d'ajuster la tension de nœud du bus d'alimentation 20 de 5 à 20 volts par exemple, plage correspondant notamment à la norme USB PD (de l'anglais USB Power Delivery).

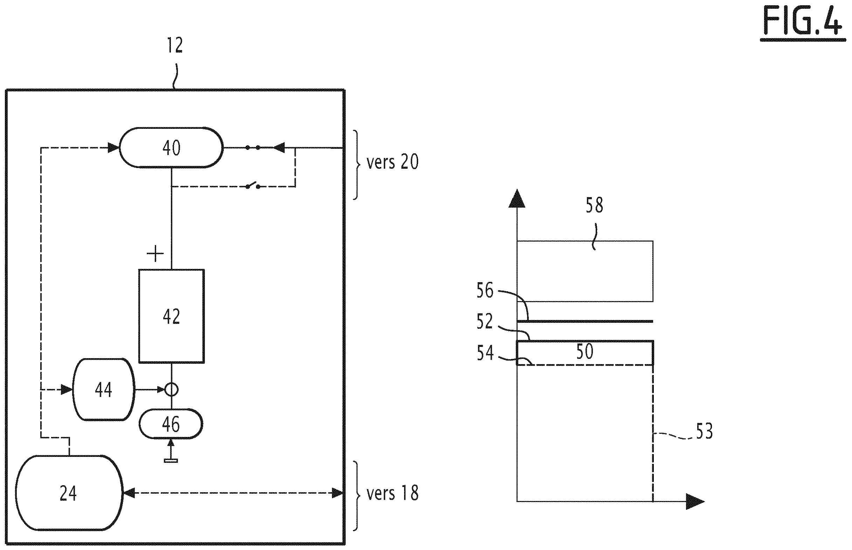

La figure 4 représente le mode d'alimentation (i.e. mode chargeur) d'une batterie indépendante 12 (i.e. non embarquée au sein d'un équipement). Selon ce mode de fonctionnement, le dispositif 24 de gestion d'alimentation en énergie (i.e. le gestionnaire d'énergie) est configuré pour détecter, via son module de contrôle/commande 30, un premier niveau 58 de tension prédéterminé au sein du bus 20 d'alimentation et de partage d'énergie, le premier niveau 58 de tension prédéterminé étant représentatif de la connexion au réseau d'alimentation en énergie d'une source d'énergie 22 au moyen d'une liaison filaire ou d'une liaison sans fil, et, en cas de détection dudit premier niveau 58 de tension, est configuré pour activer automatiquement un mode d'alimentation, par ladite source d'énergie, de tout équipement portable et/ou de toute batterie portable connecté(e) audit bus d'alimentation et de partage d'énergie.

Autrement dit, un tel « mode chargeur » permet le rechargement simultané de toutes les batteries connectées au bus 20 d'alimentation tout en assurant en même temps l'alimentation des équipements en cours d'utilisation et également connectés au bus 20.

Un tel « mode chargeur » est activé automatiquement (i.e. imposé) par détection du premier niveau de tension prédéterminé 58 associé à ce mode chargeur (i.e. mode d'alimentation), un tel niveau 58 étant supérieur à la valeur 56 de tension régulée associée au mode de distribution prioritaire.

Le mode chargeur (i.e. mode d'alimentation) permet notamment de charger rapidement plusieurs batteries simultanément, avec une possibilité « d'échange à chaud » (i.e. de l'anglais *hot-swap)* assurant la continuité de la tension de bus à la déconnexion de la source et une continuité de l'alimentation des équipements connectés au bus d'alimentation 20 pendant la charge.

Dans le cas d'une source en tension 22 non limitée en puissance, les batteries se chargent avec le courant maximal admissible par leur batterie d'accumulateurs 42 sans qu'un lien de communication entre la source 22 et le dispositif 24 de gestion d'alimentation en énergie jouant le rôle de maître au sein du réseau de communication.

Dans le cas d'une source d'énergie 22 limitée en puissance (panneau solaire, secondaire de chargeur sans fil), une communication est mise en œuvre pour éviter l'effondrement en tension du bus 20 d'alimentation. En fonction de l'énergie de la source d'énergie 22 et de la consommation des équipements, le dispositif 24 de gestion d'alimentation en énergie jouant le rôle de maître au sein du réseau de communication ajuste dynamiquement le courant de charge de chaque batterie en transmettant à l'ensemble 40 une consigne de courant, l'ensemble 40 étant asservi à cette consigne. Lorsque la source 22 est conforme à la norme USB PD (de l'anglais USB Power Delivery) et comprend notamment une interface de dialogue conforme au protocole de dialogue USB 3.x, le dispositif 24 de gestion d'alimentation en énergie jouant le rôle de maître échange avec la source 22 via son interface de dialogue, puis adapte le courant de charge de chaque batterie en fonction de la capacité en puissance de la source USB PD.

La figure 5 illustre schématiquement différents scénarios d'utilisation du système 10 portable de gestion d'alimentation en énergie.

Selon un premier exemple, les éléments 60 et 62 de la pluralité d'équipement(s) portable(s) et/ou de batterie(s) portable(s) distinct(s) correspond à une première et une deuxième batteries, toutes deux en mode non prioritaire, chargées à la même tension, par exemple de valeur égale à 12,6 volts et présentant une puissance d'alimentation de valeur identique par exemple de 50W (watts) alors que l'élément 64 correspond à un équipement à alimenter de 40W dépourvu de batterie. Selon ce premier exemple, les deux batteries en mode non prioritaires identiques, sont commandées par le dispositif 24 de gestion d'alimentation en énergie jouant le rôle de maître au sein du réseau de communication, de sorte à se partager la fourniture d'énergie en fournissant simultanément 20W chacune à l'équipement 64 requérant une alimentation de 40W via le bus 20 non représenté sur la figure 5.

Cependant, un tel premier exemple reste théorique car en pratique les deux batteries 60 et 62 ne peuvent être rigoureusement identiques, la batterie 62 étant chargée à 11 volts au lieu des 12,6 volts de la batterie 60. Dans ce cas, selon un deuxième exemple, c'est la batterie 60 chargée avec la tension la plus haute soit 12,6 volts qui fournit une puissance de 40W à l'équipement 64 requérant une alimentation de 40W.

A titre d'alternative, selon un troisième exemple le dispositif 24 de gestion d'alimentation en énergie jouant le rôle de maître au sein du réseau de communication active le mode prioritaire de la batterie 60 afin que celle-ci alimente en priorité l'équipement 64 requérant une alimentation de 40W.

Selon un quatrième exemple, l'équipement 64 requiert une alimentation de 80W supérieure à la puissance de 50W des batteries 60 et 62. En mode non prioritaire des deux batteries 60 et 62, la batterie 60 chargée avec la tension la plus haute soit 12,6 volt passe en mode protection et se coupe pour se protéger, puis la deuxième batterie 62 prends le relais mais se coupe également pour se protéger car elle ne peut pas non plus fournir la puissance de 80W requise par l'équipement 64 ce qui va entraîner l'effondrement du nœud d'alimentation (i.e. de la tension au sein du bus d'alimentation 20 non représenté).

Pour y remédier le dispositif 24 de gestion d'alimentation en énergie jouant le rôle de maître au sein du réseau de communication active alors le mode prioritaire des batteries 60 et 62 propres à fournir chacune une puissance de 50W afin qu'elles se partagent l'énergie à fournir à l'équipement 64 requérant une puissance de 80W.

Autrement dit, le dispositif 24 de gestion d'alimentation en énergie jouant le rôle de maître au sein du réseau de communication est propre à requérir (i.e. imposer) le passage simultané en mode de distribution prioritaire d'au moins deux batteries dudit réseau d'alimentation, lesdites au moins deux batteries étant propres à fournir ensemble une puissance cumulée supérieure ou égale à la puissance d'alimentation nécessaire dudit au moins un autre équipement(s) connecté(s) au réseau de communication.

Cependant, tel qu'illustré sur la figure 5 en pointillé pour ce quatrième exemple, en pratique le nœud d'alimentation de l'équipement 64 requérant une puissance de 80W présente généralement des résistances R1 et R2 de câblage différente, la résistance R1 de câblage entre la batterie 60 et l'équipement 64 étant supérieure à la résistance R2 de câblage entre la batterie 62 et l'équipement 64, si bien que la batterie 62 associée à l'impédance R2 de câblage la plus faible fournit le plus d'énergie et est propre à se couper pour se protéger si la puissance de l'énergie requise devient alors supérieure à la puissance maximale qu'elle peut fournir.

Pour y remédier, le dispositif 24 de gestion d'alimentation en énergie jouant le rôle de maître au sein du réseau de communication est propre à requérir une augmentation de la tension régulée fournie par au moins une desdites au moins deux batteries en mode de distribution prioritaire, ladite augmentation étant propre à compenser une variation de résistance de câblage entre chacune des desdites au moins deux batteries et ledit au moins un autre équipement(s) connecté(s) au réseau de communication.

Plus précisément, selon cet aspect, le dispositif 24 de gestion d'alimentation en énergie jouant le rôle de maître au sein du réseau de communication est propre à requérir périodiquement la tension et le courant fournis par chaque batterie, et à partir de ces informations le dispositif 24 de gestion d'alimentation en énergie jouant le rôle de maître est propre à calculer une nouvelle consigne de tension prioritaire à la batterie associée à l'impédance R1 de câblage la plus forte.

A titre complémentaire optionnel, de manière autonome, chaque dispositif 24 de gestion d'alimentation en énergie de chaque batterie (y compris avec le rôle d'esclave) est propre à diminuer la consigne en interne de la tension prioritaire de la batterie qui le contient lorsque son fonctionnement s'approche de sa limitation de courant, forçant ainsi la batterie prioritaire avec la tension la plus élevée à fournir un peu plus de courant et donc à décharger en courant la batterie qui s'approchait de sa limitation en courant 53.

Ainsi, une compensation dynamique des écarts de tension, autonome ou guidée par le dispositif 24 de gestion d'alimentation en énergie jouant le rôle de maître au sein du réseau de communication, permet de faire contribuer simultanément deux batteries (i.e. mutualiser leur contribution énergétique en les cumulant) à la fourniture d'énergie d'un équipement requérant une puissance énergétique supérieure à la puissance propre à être fournie par chaque batterie.

Les figures 6 et 7 illustrent différents scénarios de communication au sein du système 10 portable de gestion d'alimentation en énergie de la figure 1. Autrement dit, ces figures visent plus à expliquer les échanges au sein du système 10 portable de gestion d'alimentation en énergie via le hub de communication 18.

Comme indiqué précédemment, chaque dispositif 24 de gestion d'alimentation en énergie est configuré pour jouer un rôle de maître ou d'esclave au sein d'un ensemble de dispositifs 24 de gestion d'alimentation en énergie associés chacun respectivement à un équipement portable 14, 16 et/ou batterie portable 12 de ladite pluralité.

Plus précisément, le dispositif 24 de gestion d'alimentation en énergie jouant le rôle de maître (notamment le dispositif 24 de l'équipement portable 14 de la figure 1) centralise la gestion d'énergie et assure un dialogue avec les dispositifs 24 esclaves (batteries 12 ou autres équipements 16), qui appliquent les requêtes du dispositif 24 de gestion d'alimentation en énergie jouant le rôle de maître et remontent des informations à sa demande.

Par ailleurs, selon un aspect particulier de l'invention, le système 10 est capable de changer de maître suite à la déconnexion du maître courant.

Il est à noter qu'en général, le rôle de maître est préférentiellement attribué à un équipement autre qu'une batterie indépendante 12 (e.g. un équipement radio 14). La batterie indépendante 12 a généralement un rôle d'esclave.

Pour communiquer sur le réseau qui est composé des équipements 12, 14, 16 connectés au hub 18 de communication, le dispositif 24 de gestion d'alimentation en énergie jouant le rôle de maître et les autres dispositifs 24 de gestion d'alimentation en énergie jouant le rôle d'esclaves utilisent un protocole de communication prédéterminé, par exemple le protocole USB 2.0 et échangent des messages structurés pour indiquer la nature des données.

Au sein de chaque dispositif 24 de gestion d'alimentation en énergie, le module 30 de contrôle/commande est un automate.

Un tel automate est propre à traiter différents types de messages, un message correspondant à une requête ou à une réponse, les différents types comprenant :
- les messages communs destinés à tous les équipements, tels qu'une requête d'initialisation pour identifier les équipements connectés au réseau ;
- les messages spécifiques destinés à une batterie, tels qu'une requête pour demander la capacité d'une batterie ou pour demander la tension aux bornes de la batterie ;
- les messages spécifiques destinés aux équipements qui ont la capacité de jouer le rôle de maître, tels qu'une requête pour attribuer l'ordre hiérarchique des maîtres.

En particulier, tel qu'illustré par la figure 6, un dispositif 24 de gestion d'alimentation en énergie jouant un rôle de maître courant au sein d'un ensemble de dispositifs 24 de gestion d'alimentation en énergie associés, chacun respectivement à un équipement portable 66 et/ou batterie portable 68 de ladite pluralité, est propre à mettre en œuvre un procédé de gestion d'alimentation en énergie au sein du système 10 précité.

Sur la figure 6, le dispositif 24 de gestion d'alimentation en énergie jouant un rôle de maître courant est le dispositif 24 de gestion d'alimentation en énergie de l'équipement portable avec batterie 66, tandis que le dispositif 24 de gestion d'alimentation en énergie de la batterie indépendante 68 joue le rôle d'esclave.

Le procédé selon l'invention comprend tout d'abord une phase cyclique de configuration P_C où le dispositif 24 de gestion d'alimentation en énergie jouant un rôle de maître courant identifie au moins un autre dispositif 24 de gestion d'alimentation en énergie dudit ensemble jouant le rôle d'esclave.

La phase cyclique de configuration P_C illustrée par sur la figure 6 est notamment mise en œuvre après une étape 70 de branchement de la batterie indépendante 68 au réseau de communication via le hub 18 et au réseau d'alimentation via le bus d'alimentation 20.

Lors de la phase cyclique de configuration P_C, une étape 72 est mise en œuvre par le dispositif 24 de gestion d'alimentation en énergie jouant un rôle de maître de l'équipement portable avec batterie 66 pour transmettre une requête d'identification à batterie indépendante 68.

En réponse, selon l'étape 74, le dispositif 24 de gestion d'alimentation en énergie esclave de la batterie indépendante 68, génère via son module 28 de gestion de message(s) une réponse avec son identifiant.

Selon une étape 76, le dispositif 24 de gestion d'alimentation en énergie maître de l'équipement portable avec batterie 66 met en œuvre une étape d'analyse du réseau courant.

Selon une étape 78 parallèle à l'étape 76, la phase cyclique de configuration P_C comprenant les étapes d'identification 72 et 74 précitées est réitérée périodiquement selon une période prédéterminée.

Le procédé selon l'invention comprend ensuite une phase de gestion P_G d'alimentation en énergie où le dispositif de gestion d'alimentation en énergie, jouant un rôle de maître courant, émet au moins une requête et/ou commande à destination d'au moins un autre dispositif esclave de gestion d'alimentation en énergie et/ou reçoit une remontée d'information, périodique ou sporadique, d'au moins un autre dispositif esclave de gestion d'alimentation en énergie.

Tel qu'illustré sur la figure 6, au cours d'une telle phase de gestion P_G d'alimentation en énergie, selon une étape 80 le module de contrôle/commande 30 du dispositif 24 de gestion d'alimentation en énergie maître de l'équipement portable avec batterie 66 commande au module de gestion de message(s) 28 de générer et de transmettre, via le module d'émission-réception 26, une consigne à la batterie afin de requérir par exemple un changement de mode prioritaire ou non prioritaire. Une telle consigne est reçue via le module d'émission-réception 26 du dispositif 24 de gestion d'alimentation en énergie esclave de la batterie indépendante 68, puis remontée via le module de gestion de message(s) 28, au module de contrôle/commande 30 du dispositif 24 de gestion d'alimentation en énergie esclave de la batterie indépendante 68.

En réponse, au cours d'une étape 82, le module de contrôle/commande 30 du dispositif 24 de gestion d'alimentation en énergie esclave de la batterie indépendante 68 commande au module de gestion de message(s) 28 de générer et de transmettre, via le module d'émission-réception 26, une information indiquant que le changement de mode est effectif.

Une telle information est reçue via le module d'émission-réception 26 du dispositif 24 de gestion d'alimentation en énergie maitre de l'équipement portable avec batterie 66, puis remontée via le module de gestion de message(s) 28, au module de contrôle/commande 30 du dispositif 24 de gestion d'alimentation en énergie maitre de l'équipement portable avec batterie 66.

A titre d'alternative au cours d'une telle phase de gestion P_G d'alimentation en énergie, selon une étape 84 le dispositif 24 de gestion d'alimentation en énergie esclave de la batterie indépendante 68 remonte périodiquement la valeur de sa tension de charge et/ou de son courant de charge, par exemple 5V lors d'une première période puis 5,1V à la période suivante.

Selon une autre alternative, au cours d'une telle phase de gestion P_G d'alimentation en énergie, selon une étape 86 le dispositif 24 de gestion d'alimentation en énergie esclave de la batterie indépendante 68 remonte sporadiquement un changement automatique de mode notamment en cas de passage en mode d'alimentation (chargeur) suite à la détection du branchement d'une source d'énergie 22, ou en cas de passage en mode de protection.

En outre, procédé selon l'invention comprend également une phase de relais du rôle de maître où le dispositif de gestion d'alimentation en énergie, jouant un rôle de maître courant notifie, à chaque autre dispositif de gestion d'alimentation en énergie dudit ensemble jouant le rôle courant d'esclave et propre à jouer le rôle de maître suivant, un ordre hiérarchique entre chaque équipement portable et/ou batterie portable connecté(e) au réseau de communication pour jouer le rôle de maître suivant.

Une telle phase de relais permet de réagir en temps réel en cas de branchement/déconnexion d'un appareil aux réseaux de communication et d'alimentation respectivement via le hub 18 de communication et le bus d'alimentation 20.

Plus précisément, cette phase de relais s'appuie sur le fait que lors de la phase de configuration le dispositif 24 de gestion d'alimentation en énergie jouant le rôle de maître courant est propre à identifier ses potentiels successeurs et à leur notifier un ordre hiérarchique de prise de commandement.

Tel qu'illustré par la figure 7, on considère une pluralité d'équipement(s) portable(s) et/ou de batterie(s) portable(s) distinct(s), par exemple composée de trois éléments 66, 68, 70, correspondant par exemple, à un équipement portable 66 comprenant une batterie au sein de son boîtier, à une batterie indépendante 68, et à un équipement portable dépourvu de batterie 70. Sur la figure 7 un axe E d'évènements est également représenté.

L'évènement E1 correspond à une situation de départ où le dispositif 24 de gestion d'alimentation en énergie, jouant le rôle de maître courant, est embarqué au sein de l'équipement portable 66 comprenant une batterie au sein de son boîtier.

L'évènement E2 correspond au branchement de la batterie indépendante 68 aux réseaux de communication et d'alimentation respectivement via le hub 18 de communication et le bus d'alimentation 20, et à la mise en œuvre de la phase cyclique de configuration P_C ainsi que de la phase de gestion P_G d'alimentation en énergie tel que décrit précédemment.

L'évènement E3 correspond au branchement de l'équipement portable dépourvu de batterie 70 aux réseaux de communication et d'alimentation respectivement via le hub 18 de communication et le bus d'alimentation 20. Le dispositif 24 de gestion d'alimentation en énergie jouant le rôle de maître courant embarqué au sein de l'équipement portable 66 identifie alors ce nouvel équipement portable dépourvu de batterie 70 lors de la phase cyclique de configuration P_C et lui notifie qu'il sera son successeur.

L'évènement E4 correspond au débranchement de l'équipement portable dépourvu de batterie 70. Le dispositif 24 de gestion d'alimentation en énergie, jouant le rôle de maître courant, embarqué au sein de l'équipement portable 66 identifie alors, lors de la phase cyclique de configuration P_C, que seule la batterie indépendante 68 est branchée aux réseaux de communication et d'alimentation respectivement via le hub 18 de communication et le bus d'alimentation 20.

L'évènement E5 correspond au branchement d'un nouvel équipement portable dépourvu de batterie 72 aux réseaux de communication et d'alimentation respectivement via le hub 18 de communication et le bus d'alimentation 20. Le dispositif 24 de gestion d'alimentation en énergie, jouant le rôle de maître courant, embarqué au sein de l'équipement portable 66 identifie alors ce nouvel équipement portable dépourvu de batterie 72 lors de la phase cyclique de configuration P_C et lui notifie qu'il sera son successeur.

L'évènement E6 correspond au débranchement de l'équipement portable 66 avec batterie, et le dispositif 24 de gestion d'alimentation en énergie du nouvel équipement portable dépourvu de batterie 72 endosse alors le rôle de maître et pilote la phase de gestion P_G d'alimentation en énergie.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de connecter simplement autant d'équipement(s)/batterie(s) que souhaité en parallèle, par exemple à un nœud unique comprenant le hub 18 de communication et le bus 20 d'alimentation, pour augmenter et/ou additionner l'énergie globale disponible au sein du réseau d'alimentation en énergie du système 10 de gestion d'alimentation en énergie de la présente invention ce qui apporte un gain ergonomique à l'utilisateur porteur de la pluralité d'équipement(s) et/ou batterie(s), et ce sans démontage de batterie(s) ou d'équipement(s) fonctionnel(s).

De plus, en mode d'alimentation (i.e. mode chargeur) tel que décrit précédemment, la présente invention permet de charger toutes les batteries en même temps, qu'elles soient indépendantes ou embarquées au sein d'un équipement, en connectant le bus sur une seule source de tension 22, en conséquence de se dispenser de l'utilisation de chargeur(s) et de leur charge et volume associé (notamment au sein d'un véhicule) ou encore de s'affranchir d'un boitier d'interconnexion central ce qui augmente la résilience du système 10, tout en continuant à alimenter les équipements et d'assurer ainsi une continuité de service des équipements.

En outre, la présente invention permet aux équipements avec batterie, tel que l'équipement 12 de se charger ou de partager de l'énergie sur le bus 20 d'alimentation unique, en offrant la possibilité « d'échange à chaud » (i.e. de l'anglais *hot-swap)* de batterie sans interrompre le fonctionnement d'un équipement (i.e. continuité de service) propre à être alimenté successivement ou parallèlement par différentes batteries connectées au bus 20 d'alimentation, et ce sans discontinuité de tension sur le bus 20.

La présente invention permet également la connexion/déconnexion du réseau d'alimentation associé au bus d'alimentation et de partage d'énergie 20 à une source de tension externe 22 pour le rechargement des batteries sans discontinuité de tension sur le bus de sorte à assurer la continuité de service des équipements connectés.

L'architecture du système 10 de gestion d'alimentation en énergie de la présente invention offre également la possibilité de prioriser la batterie à utiliser parmi l'ensemble des batteries qu'elles soient indépendantes ou embarquées au sein d'un équipement, ce qui permet de décharger complètement une batterie avant de la changer au lieu d'en décharger plusieurs partiellement en même temps, ou encore de sélectionner une batterie avec une puissance adaptée à l'équipement à alimenter.

## Revendications

1. Dispositif (24) de gestion d'alimentation en énergie embarqué dans chaque élément (12, 14, 16) appartenant à une pluralité d'éléments distincts d'un système (10) portable de gestion d'alimentation en énergie, un élément correspondant à un équipement portable ou à une batterie portable, dont au moins un élément est une batterie portable ou incorporant une batterie ;
le système (10) portable comprenant en outre un hub (18) de communication configuré pour être connecté simultanément à chaque élément de ladite pluralité formant un réseau de communication, et un bus (20) d'alimentation et de partage d'énergie également connectable simultanément en parallèle à chaque élément de ladite pluralité formant un réseau d'alimentation en énergie, chaque élément de ladite pluralité comprenant en outre un convertisseur propre à adapter la tension du bus d'alimentation à leur propre tension interne de service, chaque batterie portable comprenant en outre un module d'aiguillage de chargement et ou de fourniture d'énergie via le bus d'alimentation,
ledit dispositif (24) de gestion d'alimentation en énergie d'un premier élément de ladite pluralité est configuré pour participer à la gestion d'énergie au sein dudit réseau d'alimentation, en communiquant au moyen d'un module d'émission-réception (26) dudit dispositif (24), via le hub (18) de communication, avec au moins un autre dispositif (24) identique de gestion d'alimentation en énergie embarqué dans un autre élément de ladite pluralité, et
ledit dispositif (24) du premier élément jouant le rôle de maître courant étant propre à:
- émettre une requête spécifique à destination d'au moins une batterie portable connectée audit réseau de communication,
- requérir :
∘ l'état de charge ; ou
∘ la tension aux bornes de ladite batterie, ou
∘ l'état de charge et la tension aux bornes de ladite batterie ;
ou à
- imposer un mode de distribution d'énergie, mis en œuvre par ladite au moins une batterie portable, à au moins un autre équipement portable connecté au réseau de communication,
ou **caractérisé en ce que** ledit dispositif (24) du premier élément jouant le rôle de maître courant est configuré pour :
- émettre une requête spécifique à destination d'au moins une batterie portable connectée audit réseau de communication,
- requérir :
∘ l'état de charge ; ou
∘ la tension aux bornes de ladite batterie, ou
∘ l'état de charge et la tension aux bornes de ladite batterie ;
et à
- imposer un mode de distribution d'énergie, mis en œuvre par ladite au moins une batterie portable, à au moins un autre équipement portable connecté(s) au réseau de communication, en fonction de la puissance requise par ledit au moins un autre équipement portable connecté au réseau de communication,
ledit mode de distribution d'énergie, mis en œuvre par ladite au moins une batterie portable (12), audit au moins un autre équipement portable connecté(s) au réseau de communication étant choisi entre :
- un mode de distribution prioritaire où ladite au moins une batterie portable (12) est utilisée prioritairement, jusqu'à son déchargement complet, pour contribuer à l'alimentation dudit au moins un autre équipement portable connecté(s) au réseau de communication en fournissant une tension régulée prédéterminée de valeur supérieure à la tension maximale associée à l'ensemble d'accumulateurs de ladite batterie portable utilisée prioritairement, et
- un mode de distribution non prioritaire où ladite au moins une batterie portable (12) est la batterie qui présente la tension la plus haute et qui contribue, en se déchargeant partiellement, à l'alimentation dudit au moins un autre équipement portable connecté(s) au réseau de communication en fournissant une tension non régulée associée à l'état de charge de ladite batterie utilisée non prioritairement.

2. Dispositif (24) selon la revendication 1, dans lequel ledit dispositif du premier élément est configuré pour détecter, via son module de contrôle/commande (30), un premier niveau de tension prédéterminé au sein dudit bus (20) d'alimentation et de partage d'énergie, ledit premier niveau de tension prédéterminé étant représentatif de la connexion au réseau d'alimentation en énergie d'une source d'énergie (22) au moyen d'une liaison filaire ou d'une liaison sans fil,
et, en cas de détection dudit premier niveau de tension, configuré pour activer automatiquement un mode d'alimentation, par ladite source d'énergie (22), de tout élément connecté audit bus (20) d'alimentation et de partage d'énergie.

3. Dispositif (24) selon la revendication 1 ou 2, dans lequel ledit dispositif du premier élément est configuré pour jouer un rôle de maître ou d'esclave au sein d'un ensemble de dispositifs de gestion d'alimentation en énergie associés chacun respectivement à un élément de ladite pluralité,
ledit dispositif (24) du premier élément jouant le rôle de maître courant étant configuré, via son module d'émission-réception (26), pour émettre au moins une requête et/ou commande, générée par un module de gestion de message(s) (28), à destination d'au moins un autre dispositif (24) esclave de gestion d'alimentation en énergie,
ledit dispositif (24) du premier élément jouant le rôle d'esclave étant configuré, via son module d'émission-réception (26), pour répondre à une requête émise par un dispositif (24) maître courant de gestion d'alimentation en énergie et/ou pour exécuter une commande émise par un dispositif maître courant de gestion d'alimentation en énergie.

4. Dispositif (24) selon la revendication 3, dans lequel ledit dispositif (24) du premier élément jouant le rôle de maître courant est propre à émettre différents types de requête appartenant au groupe comprenant au moins :
- une requête d'initialisation propre à requérir une identification d'au moins un élément connecté au réseau de communication ;
- une requête spécifique à destination d'au moins une batterie portable connectée audit réseau de communication, propre à requérir l'état de charge et/ou la tension aux bornes de ladite batterie, et/ou propre à imposer un mode de distribution d'énergie, mis en œuvre par ladite au moins une batterie portable, à au moins un autre équipement portable connecté au réseau de communication ;
- une requête spécifique à destination d'au moins un élément connecté au réseau de communication et propre à jouer le rôle de maître suivant, ladite requête spécifique informant ledit au moins un élément d'un ordre hiérarchique entre chaque élément connecté au réseau de communication pour jouer le rôle de maître suivant.

5. Dispositif (24) selon la revendication 2, dans lequel le premier niveau de tension prédéterminé associé au mode d'alimentation est supérieur à la valeur de tension régulée associée au mode de distribution prioritaire.

6. Dispositif (24) selon l'une quelconque des revendications précédentes, dans lequel ledit dispositif du premier élément jouant le rôle de maître courant est propre à :
- requérir le passage simultané en mode de distribution prioritaire d'au moins deux batteries dudit réseau d'alimentation, lesdites au moins deux batteries étant propres à fournir ensemble une puissance cumulée supérieure ou égale à la puissance d'alimentation nécessaire dudit au moins un autre élément à alimenter connecté au réseau de communication, et
- requérir une augmentation de la tension régulée fournie par au moins une desdites au moins deux batteries en mode de distribution prioritaire, ladite augmentation étant propre à compenser une variation de résistance de câblage entre chacune des desdites au moins deux batteries et ledit au moins un autre élément à alimenter connecté(s) au réseau de communication.

7. Système (10) de gestion d'alimentation en énergie d'une pluralité d'éléments (12, 14, 16) (12) distincts, un élément correspondant à un équipement portable ou à une batterie portable dont au moins un élément est une batterie portable ou incorporant une batterie ; le système comprenant :
- ladite pluralité d'éléments distincts,
- un hub (18) de communication de données connectable simultanément à chaque élément de ladite pluralité formant un réseau de communication, et
- un bus (20) d'alimentation et de partage d'énergie également connectable simultanément en parallèle à chaque élément de ladite pluralité formant un réseau d'alimentation en énergie,
chaque élément de ladite pluralité comprenant en outre un convertisseur propre à adapter la tension du bus d'alimentation à leur propre tension interne de service, chaque batterie comprenant en outre un module d'aiguillage de chargement et ou de fourniture d'énergie via le bus d'alimentation
chaque élément de ladite pluralité comprenant un dispositif (24) de gestion d'alimentation en énergie selon l'une quelconque des revendications précédentes.

8. Procédé de gestion d'alimentation en énergie d'un système de gestion d'alimentation en énergie selon la revendication 7 comprenant une pluralité d'éléments distincts,
le procédé étant mis en œuvre par un dispositif (24) de gestion d'alimentation en énergie jouant un rôle de maître courant au sein d'un ensemble de dispositifs de gestion d'alimentation en énergie associés chacun respectivement à un élément de ladite pluralité, les autres dispositifs de gestion d'alimentation en énergie dudit ensemble jouant le rôle d'esclave,
le procédé comprenant :
- une phase cyclique de configuration où le dispositif (24) de gestion d'alimentation en énergie jouant un rôle de maître courant identifie au moins un autre dispositif de gestion d'alimentation en énergie dudit ensemble jouant le rôle d'esclave,
- une phase de gestion d'alimentation en énergie où le dispositif (24) de gestion d'alimentation en énergie, jouant un rôle de maître courant, émet au moins une requête et/ou commande à destination d'au moins un autre dispositif esclave de gestion d'alimentation en énergie et/ou reçoit une remontée d'information, périodique ou sporadique, d'au moins un autre dispositif esclave de gestion d'alimentation en énergie,
- une phase de relais du rôle de maître où le dispositif (24) de gestion d'alimentation en énergie, jouant un rôle de maître courant notifie, à chaque autre dispositif de gestion d'alimentation en énergie dudit ensemble jouant le rôle courant d'esclave et propre à jouer le rôle de maître suivant, un ordre hiérarchique entre chaque équipement portable et/ou batterie portable connecté(e) au réseau de communication pour jouer le rôle de maître suivant.

9. Programme d'ordinateur comportant des instructions logicielles qui lorsqu'elles sont exécutées par un ordinateur, mettent en œuvre un procédé de gestion d'alimentation en énergie d'un système de gestion d'alimentation en énergie comprenant une pluralité d'équipement(s) et/ou de batterie(s) distinct(s) selon la revendication 8.

## Patentansprüche

1. Vorrichtung (24) zur Verwaltung der Energieversorgung, die in jedem Element (12, 14, 16) eingebettet ist, das zu einer Vielzahl verschiedener Elemente eines tragbaren Systems (10) zur Verwaltung der Energieversorgung gehört, wobei ein Element einer tragbaren Ausrüstung oder einer tragbaren Batterie entspricht, wovon mindestens ein Element eine tragbare Batterie ist oder eine Batterie enthält;
wobei das tragbare System (10) ferner einen Kommunikations-Hub (18) umfasst, der ausgelegt ist, um gleichzeitig mit jedem Element der Vielzahl verbunden zu sein, die ein Netzwerk bilden, und einen Bus (20) zur Versorgung und gemeinsamen Nutzung von Energie, der ebenfalls gleichzeitig parallel mit jedem Element der Vielzahl verbindbar ist, die ein Energieversorgungsnetz bilden, wobei jedes Element der Vielzahl ferner einen Wandler umfasst, der imstande ist, die Spannung des Versorgungsbusses an ihre eigene interne Betriebsspannung anzupassen, wobei jede tragbare Batterie ferner ein Weichenmodul zum Laden und/oder Liefern von Energie über den Versorgungsbus umfasst,
wobei die Vorrichtung zur Verwaltung der Energieversorgung (24) eines ersten Elements der Vielzahl ausgelegt ist, um an der Energieverwaltung innerhalb des Versorgungsnetzes teilzunehmen, indem sie mittels eines Sende-Empfangs-Moduls (26) der Vorrichtung (24) über den Kommunikations-Hub (18) mit mindestens einer anderen identischen Vorrichtung zur Verwaltung der Energieversorgung (24) kommuniziert, die in einem anderen Element der Vielzahl eingebettet ist, und
wobei die Vorrichtung (24) des ersten Elements, das die Masterstrom-Rolle spielt, imstande ist:
- eine spezifische Anforderung an mindestens eine tragbare Batterie zu senden, die mit dem Kommunikationsnetz verbunden ist,
- abzufragen:
∘ den Ladezustand; oder
o die Spannung an den Klemmen der Batterie, oder
o den Ladezustand und die Spannung an den Klemmen der Batterie;
oder
- einen Energieverteilungsmodus, der von der mindestens einer tragbaren Batterie umgesetzt wird, mindestens einer anderen tragbaren Ausrüstung vorzuschreiben, die mit dem Kommunikationsnetz verbunden ist,
oder **dadurch gekennzeichnet, dass** die Vorrichtung (24) des ersten Elements, das die Masterstrom-Rolle spielt, ausgelegt ist, um:
- eine spezifische Anforderung an mindestens eine tragbare Batterie zu senden, die mit dem Kommunikationsnetz verbunden ist,
- abzufragen:
∘ den Ladezustand; oder
o die Spannung an den Klemmen der Batterie, oder
o den Ladezustand und die Spannung an den Klemmen der Batterie;
und
- mindestens einer anderen tragbaren Ausrüstung, die mit dem Kommunikationsnetz verbunden ist/sind, in Abhängigkeit von der Leistung, die von der mindestens einen anderen tragbaren Ausrüstung, die mit dem Kommunikationsnetz verbunden ist/sind, angefordert wird, einen Energieverteilungsmodus vorzuschreiben, der von der mindestens einer tragbaren Batterie umgesetzt wird,
wobei der Energieverteilungsmodus, der von der mindestens einer tragbaren Batterie (12) gegenüber der mindestens einer anderen tragbaren Ausrüstung, die mit dem Kommunikationsnetz verbunden ist/sind, umgesetzt wird, ausgewählt ist zwischen:
- einem vorrangigen Verteilungsmodus, bei dem die mindestens eine tragbare Batterie (12) bis zu ihrer vollständigen Entladung vorrangig verwendet wird, um zur Versorgung der mindestens einen anderen tragbaren Ausrüstung beizutragen, die mit dem Kommunikationsnetz verbunden ist/sind, durch Bereitstellung einer vorbestimmten geregelten Spannung, deren Wert höher ist als die maximale Spannung, die der Akkumulatorenanordnung der vorrangig verwendeten tragbaren Batterie zugeordnet ist, und
- einem Verteilungsmodus, der nicht vorrangig ist, bei dem die mindestens eine tragbare Batterie (12) die Batterie mit der höchsten Spannung ist und die durch Teilentladung zur Versorgung der mindestens einen anderen tragbaren Ausrüstung beiträgt, die mit dem Kommunikationsnetz verbunden ist/sind, durch Bereitstellung einer ungeregelten Spannung, die dem Ladezustand der nicht vorrangig verwendeten Batterie zugeordnet ist.

2. Vorrichtung (24) nach Anspruch 1, wobei die Vorrichtung des ersten Elements ausgelegt ist, um über ihr Steuer-/Regelmodul (30) ein erstes vorbestimmtes Spannungsniveau innerhalb des Busses (20) zur Versorgung und gemeinsamen Nutzung von Energie zu ermitteln, wobei das erste vorbestimmte Spannungsniveau für die Verbindung einer Energiequelle (22) mit dem Energieversorgungsnetz mittels einer drahtgebundenen Verbindung oder einer drahtlosen Verbindung repräsentativ ist,
und, wenn das erste Spannungsniveau ermittelt wird, ausgelegt ist, um automatisch einen Versorgungsmodus jedes Elements, das mit dem Bus (20) zur Versorgung und gemeinsamen Nutzung von Energie verbunden ist, durch die Energiequelle (22) zu aktivieren.

3. Vorrichtung (24) nach Anspruch 1 oder 2, wobei die Vorrichtung des ersten Elements ausgelegt ist, um eine Master- oder Slave-Rolle innerhalb einer Anordnung von Vorrichtungen zur Verwaltung der Energieversorgung zu spielen, die jeweils einem Element der Vielzahl zugeordnet sind,
wobei die Vorrichtung (24) des ersten Elements, die die Masterstrom-Rolle spielt, über ihr Sende-/Empfangsmodul (26) ausgelegt ist, um mindestens eine Anforderung und/oder einen Befehl, die/der von einem Nachrichtenverwaltungsmodul (28) erzeugt wird, an mindestens eine andere Slave-Vorrichtung (24) zur Verwaltung der Energieversorgung zu senden,
wobei die Vorrichtung (24) des ersten Elements, das die Slave-Rolle spielt, über ihr Sende-/Empfangsmodul (26) ausgelegt ist, um auf eine von einer Masterstrom-Vorrichtung (24) zur Verwaltung der Energieversorgung gesendete Anforderung zu antworten und/oder um einen von einer Masterstrom-Vorrichtung zur Verwaltung der Energieversorgung gesendeten Befehl auszuführen.

4. Vorrichtung (24) nach Anspruch 3, wobei die Vorrichtung (24) des ersten Elements, das die Masterstrom-Rolle spielt, geeignet ist, verschiedene Arten von Anforderungen zu senden, die zu der Gruppe gehören, die mindestens umfasst:
- eine Initialisierungsanforderung, die geeignet ist, eine Identifizierung mindestens eines mit dem Kommunikationsnetz verbundenen Elements anzufordern;
- eine spezifische Anforderung an mindestens eine tragbare Batterie, die mit dem Kommunikationsnetz verbunden ist, die imstande ist, den Ladezustand und/oder die Spannung an den Klemmen der Batterie anzufordern, und/oder die imstande ist, einen Energieverteilungsmodus, der von der mindestens einer tragbaren Batterie umgesetzt wird, mindestens einer anderen tragbaren Ausrüstung vorzuschreiben, die mit dem Kommunikationsnetz verbunden ist;
- eine spezifische Anforderung an mindestens ein Element, das mit dem Kommunikationsnetz verbunden und imstande ist, die Rolle des nächsten Masters zu spielen, wobei die spezifische Anforderung das mindestens eine Element über eine hierarchische Reihenfolge zwischen jedem Element informiert, das mit dem Kommunikationsnetz verbunden ist, um die Rolle des nächsten Masters zu spielen.

5. Vorrichtung (24) nach Anspruch 2, wobei das erste vorbestimmte Spannungsniveau, das dem Versorgungsmodus zugeordnet ist, höher ist als der geregelte Spannungswert, der dem vorrangigen Verteilungsmodus zugeordnet ist.

6. Vorrichtung (24) nach einem der vorhergehenden Ansprüche, wobei die Vorrichtung des ersten Elements, die die Masterstrom-Rolle spielt, imstande ist:
- den gleichzeitigen Wechsel von mindestens zwei Batterien des Versorgungsnetzes in den vorrangigen Verteilungsmodus anzufordern, wobei die mindestens zwei Batterien imstande sind, gemeinsam eine kumulierte Leistung zu liefern, die größer oder gleich der Leistung ist, die für die Versorgung des mindestens einen anderen zu versorgenden Elements notwendig ist, das mit dem Kommunikationsnetz verbunden ist, und
- eine Erhöhung der regulierten Spannung anzufordern, die von mindestens einer der mindestens zwei Batterien im vorrangigen Verteilungsmodus geliefert wird, wobei die Erhöhung imstande ist, eine Änderung des Verdrahtungswiderstands zwischen jeder der mindestens zwei Batterien und dem mindestens einen anderen zu versorgenden Element, das/die mit dem Kommunikationsnetz verbunden ist/sind, zu kompensieren.

7. System (10) zur Verwaltung der Energieversorgung einer Vielzahl verschiedener Elemente (12, 14, 16) (12), wobei ein Element einer tragbaren Ausrüstung oder einer tragbaren Batterie entspricht, wovon mindestens ein Element eine tragbare Batterie ist oder eine Batterie enthält; wobei das System umfasst:
- die Vielzahl verschiedener Elemente,
- einen Datenkommunikations-Hub (18), der gleichzeitig mit jedem Element der Vielzahl, die ein Kommunikationsnetz bilden, verbindbar ist, und
- einen Bus (20) zur Versorgung und gemeinsamen Nutzung von Energie, der ebenfalls gleichzeitig parallel mit jedem Element der Vielzahl, die ein Energieversorgungsnetz bilden, verbindbar ist,
wobei jedes Element der Vielzahl ferner einen Wandler umfasst, der imstande ist, die Spannung des Versorgungsbusses an ihre eigene interne Betriebsspannung anzupassen, wobei jede Batterie ferner ein Weichenmodul zum Laden und/oder Liefern von Energie über den Versorgungsbus umfasst,
wobei jedes Element der Vielzahl eine Vorrichtung (24) zur Verwaltung der Energieversorgung nach einem der vorhergehenden Ansprüche umfasst.

8. Verfahren zur Verwaltung der Energieversorgung eines Systems zur Verwaltung der Energieversorgung nach Anspruch 7, das eine Vielzahl verschiedener Elemente umfasst,
wobei das Verfahren von einer Vorrichtung (24) zur Verwaltung der Energieversorgung umgesetzt wird, die eine Masterstrom-Rolle innerhalb einer Anordnung von Vorrichtungen zur Verwaltung der Energieversorgung spielt, die jeweils einem Element der Vielzahl zugeordnet sind, wobei die anderen Vorrichtungen zur Verwaltung der Energieversorgung der Anordnung die Slave-Rolle spielen,
wobei das Verfahren umfasst:
- eine zyklische Konfigurationsphase, in der die Vorrichtung (24) zur Verwaltung der Energieversorgung, die eine Masterstrom-Rolle spielt, mindestens eine andere Vorrichtung zur Verwaltung der Energieversorgung der Anordnung identifiziert, die die Slave-Rolle spielt,
- eine Verwaltungsphase der Energieversorgung, in der die Vorrichtung (24) zur Verwaltung der Energieversorgung, die eine Masterstrom-Rolle spielt, mindestens eine Anforderung und/oder einen Befehl an mindestens eine andere Slave-Vorrichtung zur Verwaltung der Energieversorgung sendet und/oder eine periodische oder sporadische Rückmeldung von mindestens einer anderen Slave-Vorrichtung zur Verwaltung der Energieversorgung erhält,
- eine Relais-Phase der Master-Rolle, in der die Vorrichtung (24) zur Verwaltung der Energieversorgung, die die Masterstrom-Rolle spielt, jeder anderen Vorrichtung zur Verwaltung der Energieversorgung der Anordnung, die die Slavestrom-Rolle spielt und imstande ist, die Rolle des nächsten Masters zu spielen, eine hierarchische Reihenfolge zwischen jeder tragbaren Ausrüstung und/oder tragbaren Batterie zuweist, die mit dem Kommunikationsnetz verbunden ist/sind, um die Rolle des nächsten Masters zu spielen.

9. Rechnerprogramm, das Softwareanweisungen aufweist, die, wenn sie von einem Rechner ausgeführt werden, ein Verfahren zum Verwaltung der Energieversorgung eines Systems zur Verwaltung der Energieversorgung umsetzten, das eine Vielzahl verschiedener Ausrüstungen und/oder Batterien nach Anspruch 8 umfasst.

## Claims

1. An embedded energy supply management device (24) in each element (12, 14, 16) belonging to a plurality of separate elements of a portable energy supply management system (10), an element corresponding to a portable equipment or a portable battery, of which at least one element is a portable battery or incorporates a battery;
the portable system (10) further comprising a communication hub (18) configured to be connected simultaneously to each element of said plurality forming a communication network, and an energy supply and sharing bus (20) which can also be connected simultaneously in parallel to each element of said plurality forming an energy supply network, each element of said plurality further comprising a converter configure to adapt the supply bus voltage to their own internal service voltage, each portable battery further comprising a switching module for charging and/or for supplying energy via the supply bus,
said energy supply management device (24) of a first element of said plurality is configured to participate in the management of energy within that energy supply network, by communicating by means of a transmission-reception module (26) of said device (24), via the communication hub (18), with at least one identical energy supply management device (24) embedded in another element of said plurality, and
said device (24) of said first element playing the role of current master being configured to:
- send a specific request to at least one portable battery connected to said communication network;
- request :
∘ the state of charge; or
∘ the voltage at the terminals of said battery, or
∘ the state of charge and the voltage at the terminals of said battery;
or to
- impose an energy distribution mode, implemented by said at least one portable battery, to at least one other portable equipment connected to the communication network,
or **characterised in that** said device (24) of said first element playing the role of current master is configured to:
- send a specific request to at least one portable battery connected to said communication network;
- request :
∘ the state of charge; or
∘ the voltage at the terminals of said battery, or
∘ the state of charge and the voltage at the terminals of said battery;
and to
- impose an energy distribution mode, implemented by said at least one portable battery, to at least one other portable equipment connected to the communication network, depending on the power required by said at least one other portable equipment connected to the communication network,
said energy distribution mode, implemented by said at least one portable battery (12), to said at least one other portable equipment connected to the communication network being chosen between:
- a priority distribution mode where said at least one portable battery (12) is priorityused, until it is completely unloaded, to contribute to the supply of said at least one other portable device connected to the communication network by providing a predetermined regulated voltage greater than the maximum voltage associated with the set of accumulators of said priority-use portable battery, and
- a non-priority distribution mode where said at least one portable battery (12) is the battery with the highest voltage and that contributes, by partially discharging, to the supply of said at least one other portable equipment connected to the communication network by providing an unregulated voltage associated with the state of charge of said non-priority-use battery.

2. A device (24) according to claim 1, wherein said device of the first element is configured to detect, via its instrumentation-and-control module (30), a first level of predetermined voltage within said energy supply and sharing bus (20), the first predetermined voltage level being representative of the connection to the energy supply network of an energy source (22) by means of a wireline connection or a wireless connection,
and, in the event of detection of said first voltage level, configured to automatically activate a mode of supply by said energy source (22) to any element connected to said energy supply and sharing bus (20).

3. A device (24) according to claim 1 or 2, wherein said device of the first element is configured to play a role as a master or slave within a set of energy supply management devices each associated respectively with an element of said plurality,
said device (24) of the first element playing the role of current master being configured, via its transmission-reception module (26), to issue at least one request and/or command, generated by a message management module (28), to at least one other slave energy supply management device (24),
said device (24) of the first element playing the slave role being configured, via its transmission-reception module (26), to respond to a request issued by a current master energy supply management device (24) and/or to execute a command issued by a current master energy supply management device.

4. A device (24) according to claim 3, wherein said device (24) of the first element playing the role of current master is configured to send different types of request(s) belonging to the group comprising at least:
- an initialisation request to require an identification of at least one element connected to the communication network;
- a specific request for at least one portable battery connected to said communication network, configured to request the state of charge and/or voltage at the terminals of said battery, and/or configured to impose an energy distribution mode, implemented by said at least one portable battery, to at least one other portable equipment connected to the communication network;
- a specific request for at least one element connected to the communication network and capable of playing the next master, said specific request informing said at least one element of a hierarchical order between each element connected to the communication network to play the next master role.

5. A device (24) according to claim 2, in which the first predetermined voltage level associated with the energy supply mode is higher than the regulated voltage value associated with the priority distribution mode.

6. A device (24) according to any of preceding claims, wherein said device of the first element playing the role of current master is configured to:
- request the simultaneous transition to the priority distribution mode of at least two batteries of said energy supply network, said at least two batteries being configured to supply together a cumulative power greater than or equal to the power supply required by said at least one other element to be supplied connected to the communication network, and
- request an increase in the regulated voltage provided by at least one of these at least two batteries in priority distribution mode, said increase being configured to compensate a variation in the wiring resistance between each of said at least two batteries and said at least one other element to be supplied connected to the communication network.

7. An energy supply management system (10) for a plurality of separate elements (12, 14, 16), an element corresponding to a portable equipment or a portable battery, of which at least one element is a portable battery or incorporates a battery, the system comprising:
- said plurality of separate elements,
- a data communication hub (18) that can be connected simultaneously to each element of said plurality forming a communication network, and
- an energy supply and sharing bus (20) which can also be connected simultaneously to each element of said plurality forming an energy supply network,
each element of said plurality further comprising a converter configured to adapt the supply bus voltage to their own internal service voltage, each battery further comprising a switching module for charging and/or supplying energy via the supply bus,
each element of said plurality comprising an energy supply management device (24) according to any one of the preceding claims.

8. A method for managing the energy supply of an energy supply management system comprising a plurality of separate elements,
the method being implemented by an energy supply management device (24) that plays a role as a current master within a set of energy supply management devices each associated with an element of said plurality, the other energy supply management devices of said set playing the role of slaves,
the method comprising:
- a cyclical configuration phase where the energy supply management device (24) playing a current master role identifies at least one other energy supply management device from said set playing the role of slaves,
- an energy supply management phase where the energy supply management device (24), playing a current master role, issues at least one request and/or command for at least one other energy supply management slave device and/or receives periodic or sporadic feedback from at least one other energy supply management slave device,
- a phase of relaying the role of master where the energy supply management device (24), playing a current master role, notifies each other energy supply management system of said set playing the current role of slave and capable of playing the next master role, a hierarchical order between each portable equipment and/or portable battery connected to the communication network, to play the next master role.

9. A computer program product comprising software instructions which, when carried out by a computer, implement an energy supply management method of an energy supply management system comprising a plurality of separate equipment(s) and/or battery(-ies) according to claim 8.
